# EUROPEAN PATENT APPLICATION

(11) **EP 2 998 674 A1**
(43) Date of publication of application: **23.03.2016**
(21) Application number: 14797961.1
(22) Date of filing: 28.03.2014
(51) Int. Cl.: F28D 20/02, C09K 5/06

(54) **HEAT STORAGE SYSTEM**

(30) Priority: 17.05.2013 JP 2013105261
(71) Applicant: IHI Corporation, Tokyo 135-8710 (JP)
(72) Inventor: HASHIBA, Michitaro, Tokyo 135-8710 (JP); AKIYOSHI, Ryo, Tokyo 135-8710 (JP)
(74) Representative: Schaumburg und Partner Patentanwälte mbB
(86) International application number: PCT/JP2014/059293
(87) International publication number: WO 2014/185178

(57) **Abstract**

A heat storage system is provided that can reduce a decrease in heat transfer caused by a heat storage material in a solid phase. A heat storage system having a minimum heat storage temperature Tₘᵢₙ comprises a mixed salt having a non-eutectic composition, the mixed salt being configured to assume a solid-liquid coexistence state at the minimum heat storage temperature Tₘᵢₙ, the mixed salt being used as a heat storage material.

## Description

### TECHNICAL FIELD

The present invention relates to a heat storage system.

### BACKGROUND ART

A solar thermal power generation system is known, which concentrates (condenses) sunlight in a heat condensing (collecting) area to concentrate heat, and generates steam with this heat to drive a steam turbine for power generation. In general, the solar thermal power generation system is equipped with a heat storage system in order to supplement heat for power generation during night and in a time zone of insufficient sunlight, thereby suppressing a transient change in the electric power to be generated.

One of known heat storage systems used in the solar thermal power generation system or the like uses a molten salt, as a heat storage material (see Patent Literature 1, for example). The molten salt is a liquid-state salt, and referred to as a solar salt. The molten salt is a mixture of potassium nitrate (KNO₃) and sodium nitrate (NaNO₃), with the mass fraction of sodium nitrate being 0.6. This heat storage system stores the heat in the form of sensible heat.

However, when an amount of heat storage becomes large (e.g., 1 TJ), the heat storage system that relies upon the sensible heat needs a large heat storage vessel. This is not practical. To deal with it, i.e., to design the heat storage vessel with a practical size, there is a demand for a heat storage system that relies upon latent heat.

### LISTING OF REFERENCES

### PATENT LITERATURES

PATENT LITERATURE 1: Japanese Patent Application Laid-Open Publication No. 05-256591

### SUMMARY OF THE INVENTION

### PROBLEMS TO BE SOLVED BY THE INVENTION

In the conventional heat storage system that relies upon latent heat, however, the heat storage material, which becomes a solid phase during solidification, adheres to a heat transfer tube or pipe. This brings about a problem, i.e., the heat transfer drops.

In order to overcome this problem, the heat transfer tube may be arranged on the entire interior of the heat storage vessel to facilitate the heat transfer. However, when the heat storage vessel is large, an extremely large cost is required to arrange the heat transfer tube in the entire heat storage vessel. The heat storage vessel may be downscaled if the latent heat is utilized, as compared to the heat storage vessel that utilizes the sensible heat. In this case, however, the heat storage vessel would have the volume in the order of 1000 m³ when an amount of heat to be stored becomes about 1 TJ. Thus, it is not easy to arrange the heat transfer tube in the entire heat storage vessel.

In view of such facts, the present invention has an object to overcome the above-described problems, and provide a heat storage system that utilizes latent heat, and can reduce a decrease in heat transfer caused by a heat storage material in a solid phase.

### SOLUTIONS TO THE PROBLEMS

The present invention is developed to achieve the above-mentioned object, and provides a heat storage system having a minimum heat storage temperature Tₘᵢₙ, and including a mixed salt having a non-eutectic composition as a heat storage material. The mixed salt assumes a solid-liquid coexistence state at the minimum heat storage temperature Tₘᵢₙ.

It may be possible to use the heat storage material that has a temperature range of one degree C or more to assume the solid-liquid coexistence state.

The minimum heat storage temperature Tₘᵢₙ may be equal to or greater than 150 degrees C.

### ADVANTAGES OF THE INVENTION

The present invention can provide a heat storage system that can reduce a decrease in heat transfer caused by a heat storage material in a solid phase.

### BRIEF DESCRIPTION OF THE DRAWINGS

Fig. 1a is a schematic view of a heat storage system according to one embodiment of the present invention, and Fig. 1b is a state transition diagram of a mixture of KNO₃ and NaNO₃, which is used as a heat storage material in the present invention.
Fig. 2 is a state transition diagram of a mixture of CsNO₃ and NaNO₃, which is used as another heat storage material in the present invention.
Fig. 3 is a state transition diagram of a mixture of LiNO₃ and NaNO₃, which is used as still another heat storage material in the present invention.
Fig. 4 is a state transition diagram of a mixture of NaNO₃ and RbNO₃, which is used as yet another heat storage material in the present invention.
Fig. 5 is a state transition diagram of a mixture of LiBr and NaNO₃, which is used as another heat storage material in the present invention.
Fig. 6 is a schematic view of experiment equipment used in Examples of the present invention.
Figs. 7a and 7b is a set of graphs showing the changing temperature over time between the heat storage material and a metallic plate in Examples of the present invention. Specifically, Fig. 7a illustrates when a non-eutectic composition is used as the heat storage material and Fig. 7b illustrates when a eutectic composition is used as the heat storage material.

### MODE FOR CARRYING OUT THE INVENTION

Now, an embodiment of the present invention will be described with reference to the accompanying drawings.

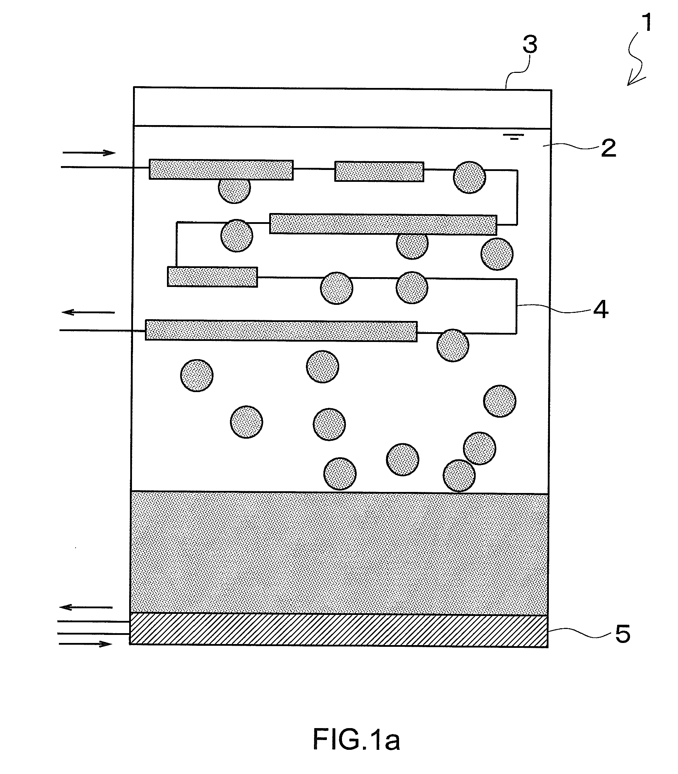

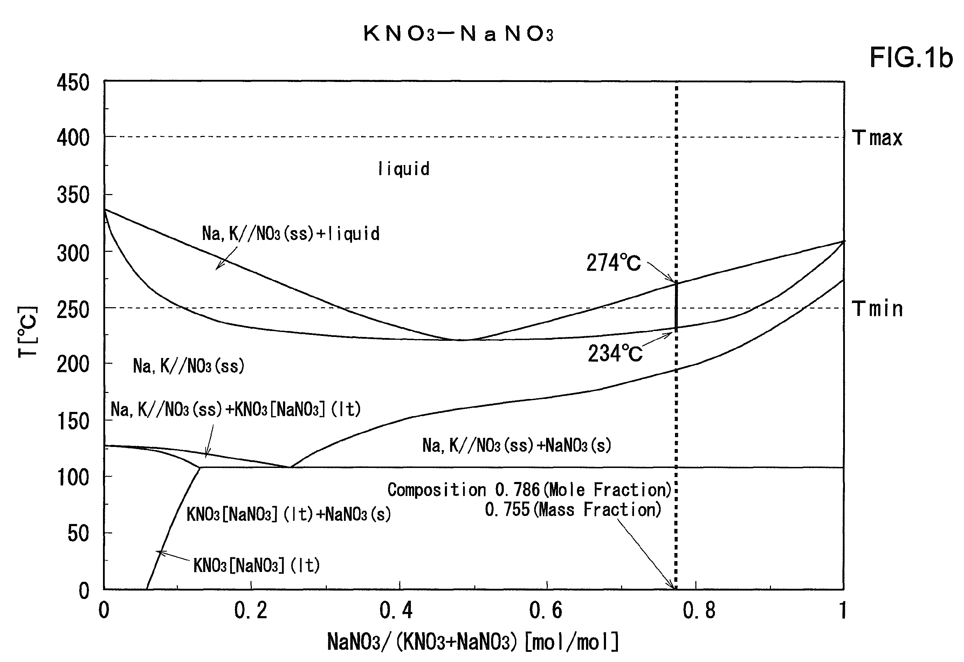

Fig. 1a is a schematic view of a heat storage system according to the embodiment of the present invention. Fig. 1b is a state transition diagram of a mixture of potassium nitrate (KNO₃) and sodium nitrate (NaNO₃), which is used as a heat storage material in this embodiment.

As shown in Fig. 1a, the heat storage system 1 includes a heat storage vessel 3 to retain the heat storage material 2, and two heat exchangers 4 and 5 disposed in the heat storage vessel 3.

The heat exchanger 4 on the cooling side (cooling heat exchanger) is supplied with a first heat medium having a low temperature to perform the heat exchange between the first heat medium and the heat storage material 2 thereby cooling the heat storage material 2. The temperature of the first heat medium becomes high upon the heat exchange. The cooling heat exchanger 4 feeds the first heat medium having a high temperature to a thermal load or the like. The cooling heat exchanger 4 has a heat transfer tube through which the first heat medium flows. The cooling heat exchanger 4 is only disposed in an upper area in the heat storage vessel 3.

The heat exchanger 5 on the heating side (heating heat exchanger) is supplied with a second heat medium having a high temperature to perform the heat exchange between the second heat medium and the heat storage material 2 thereby heating the heat storage material 2 for heat storage. The heating heat exchanger 5 is a plate-like heat exchanger, i.e., hot plate, which has a fluid passage therein to allow the second heat medium to flow in the fluid passage. The heating heat exchanger 5 is situated on a bottom of the heat storage vessel 3.

Although not shown, a stirring unit may be provided in the heat storage vessel 3 for stirring the heat storage material 2. Also, a peeling (exfoliating) unit may be provided in the heat storage vessel 3 for forcibly peeling the solid phase heat storage material 2 from the surface of the cooling heat exchanger 4.

It is assumed that this embodiment is applied to a high temperature system such as a solar thermal power generation system. In this embodiment, therefore, the minimum heat storage temperature Tₘᵢₙ is equal to or greater than 150 degrees C, and preferably equal to or greater than 200 degrees C. In one example to be described in the following description, the maximum heat storage temperature Tₘₐₓ of the heat storage system 1 is 400 degrees C, and the minimum heat storage temperature Tₘᵢₙ is 250 degrees C.

In the heat storage system 1 of this embodiment, a mixed salt having a non-eutectic composition is used as the heat storage material 2. The mixed salt assumes a solid-liquid coexistence state at the minimum heat storage temperature Tₘᵢₙ.

The following example will describe a case where a two-component mixed salt, which is a mixture of potassium nitrate (KNO₃) and sodium nitrate (NaNO₃) mixed in a non-eutectic composition, is used as the heat storage material 2.

As depicted in Fig. 1b, when the mixture of potassium nitrate and the sodium nitrate is used, the eutectic state arises when the mole fraction of sodium nitrate of the composition becomes 0.49. Therefore, the composition should be decided such that the composition to be used has other compositions than this composition which will assume a eutectic state, and the composition takes a solid-liquid coexistence state at the minimum heat storage temperature Tₘᵢₙ, i.e., 250 degrees C.

In this embodiment, the composition indicated by the bold broken line in Fig. 1b, i.e., the composition with the mole fraction of sodium nitrate being 0.786 (mass fraction being 0.755), is used as the heat storage material 2.

In this case, the heat storage material 2 starts assuming a solid phase at 274 degrees C as the heat storage material 2 is gradually cooled from 400 degrees C, which is the maximum heat storage temperature Tₘₐₓ. Upon further cooling, the heat storage material reaches 250 degrees C, which is the minimum heat storage temperature Tₘᵢₙ, while gradually increasing its solid phase rate (solid fraction). In the meantime, the solid phase appears on the cooling surface having the lowest temperature (surface of the heat transfer tube, i.e., the cooling heat exchanger 4), and the solid phase grows along the cooling surface. However, the solid phase does not stick onto the cooling surface, and therefore the solid phase falls off due to the flowing movement of the heat storage material 2 or the like. It should be noted that if the heat storage material is further cooled from 250 degrees C, which is the minimum heat storage temperature Tₘᵢₙ, the heat storage material 2 becomes the solid phase completely at 234 degrees C. In other words, the temperature zone indicated by the bold solid line in the drawing is the solid-liquid coexistence state.

The solid phase rate of the heat storage material 2 can be regulated by temperature. If the temperature range for the solid-liquid coexistence state is too narrow, it becomes difficult to regulate the solid phase rate to a desired value. Thus, the composition is preferably decided to allow the temperature range for the solid-liquid coexistence state to have one degree C or more. It should be noted that it is difficult to regulate the solid phase rate by the temperature if the heat storage material assumes the solid-liquid coexistence state with difference substances in a solid phase and a liquid phase, as in Patent Literature 1.

As described above, when the two-component mixed salt having the non-eutectic composition is used as the heat storage material 2, the heat storage material 2 does not stick firmly onto the cooling surface (surface of the heat transfer tube of the cooling heat exchanger 4) when the heat storage material 2 solidifies and assumes the solid phase. Thus, the heat storage material 2 is easy to peel off.

It is considered that this is because the solid phase rate in the vicinity of the cooling surface locally increases as the solidification starts, and therefore the solidification proceeds while the liquid-phase molten salt having a relatively low melting point is penetrating between the cooling surface and the solid phase. It is also considered that this occurs because the solid-liquid coexistence area for the non-eutectic molten salt has a certain temperature range. Therefore, as the control is performed to gradually increase the solid phase from the liquid phase (i.e., to gradually lower the temperature), it is possible to suppress the sticking of the solidified (solid phase) heat storage material 2 onto the cooling surface.

Because the solid phase heat storage material 2 that peels off due to the flowing movement of the heat storage material 2, the stirring, or the like has a large specific weight than the liquid phase heat storage material 2, the solid phase heat storage material 2 precipitates on the bottom of the heat storage vessel 3. Thus, it is possible to efficiently cool the liquid phase heat storage material 2 by disposing the cooling heat exchanger 4 in the upper area of the heat storage vessel 3. As the heating heat exchanger 5 is disposed on the bottom of the heat storage vessel 3, the weight of the solid phase heat storage material 2 itself forcibly presses the solid phase heat storage material 2 against the heating heat exchanger 5. This makes it possible to efficiently heat the solid phase heat storage material 2.

Although the mixture of potassium nitrate and sodium nitrate is used as the heat storage material 2 in this embodiment, the present invention is not limited in this regard. Any mixed salt having a non-eutectic composition that takes the solid-liquid coexistence state at the minimum heat storage temperature Tₘᵢₙ may be used as the heat storage material 2.

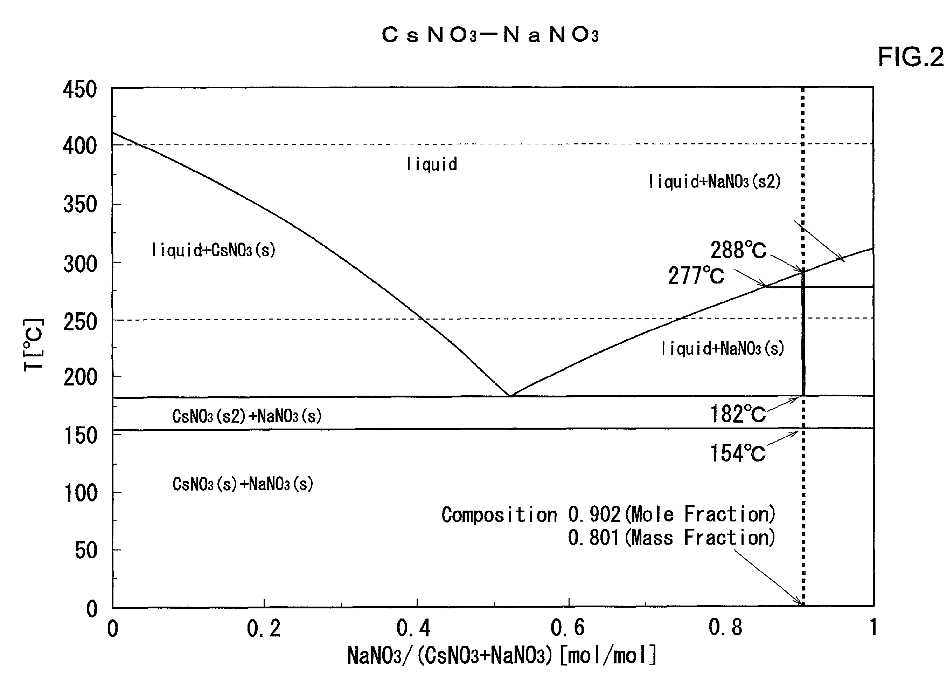

For example, any of a mixture of CsNO₃ and NaNO₃, a mixture of LiNO₃ and NaNO₃ and a mixture of NaNO₃ and RbNO₃ may be used as the heat storage material 2 if Tₘₐₓ is set to 400 degrees C and Tₘᵢₙ is set to 250 degrees C. Also, a mixture of LiBr and NaNO₃ or a similar mixture may be used as the heat storage material 2 if Tₘᵢₙ is set to 280 degrees C. Equilibrium diagrams of these mixtures are illustrated in Figs. 2-5, respectively.

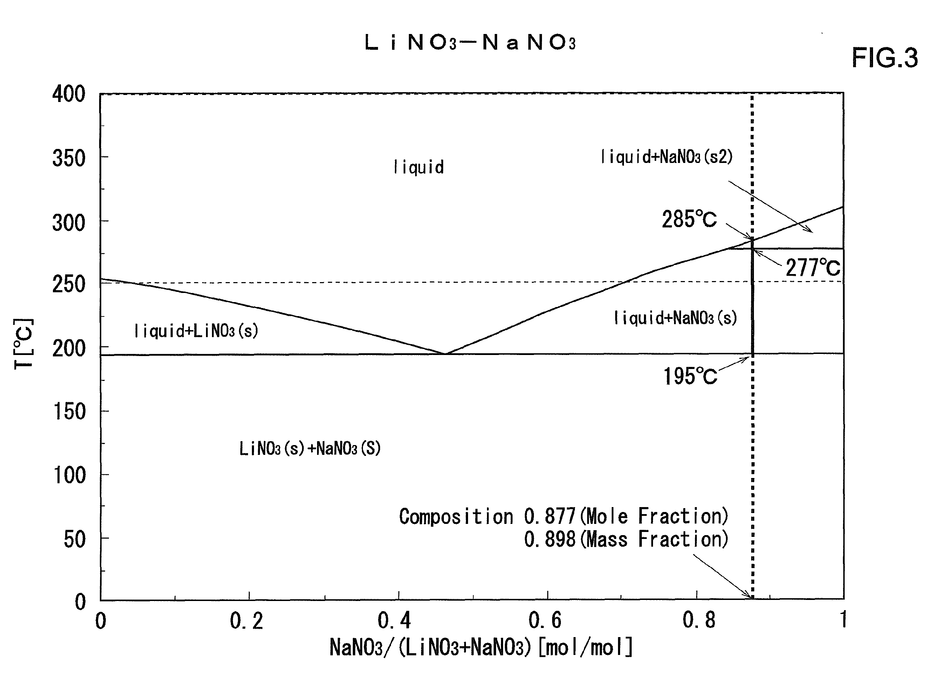

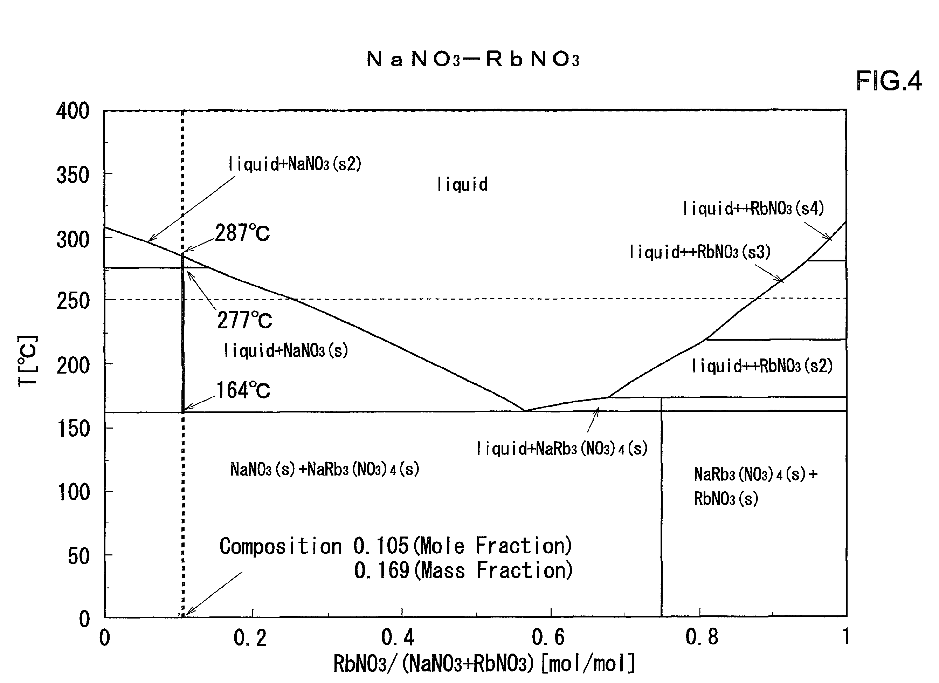

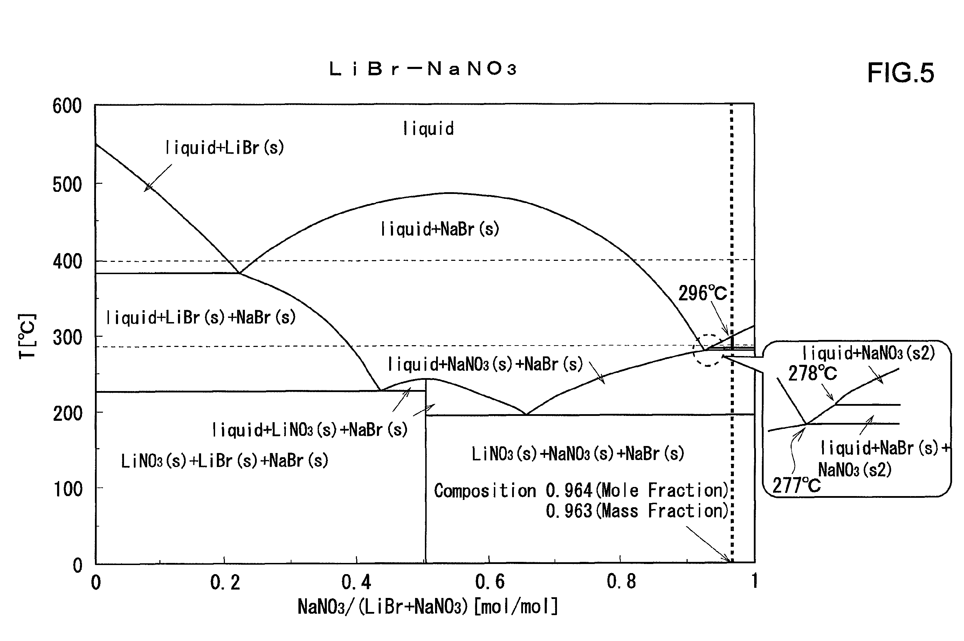

As shown in Fig. 2, when a mixture of CsNO₃ and NaNO₃ is used as the heat storage material 2, the solid-liquid coexistence state is obtained at Tₘᵢₙ (250 degrees) if the mole fraction of NaNO₃ is set to 0.902 (mass fraction is 0.801). Likewise, when a mixture of LiNO₃ and NaNO₃ is used as the heat storage material 2 as shown in Fig. 3, the solid-liquid coexistence state is obtained at Tₘᵢₙ (250 degrees) if the mole fraction of NaNO₃ is set to 0.877 (mass fraction is 0.898). When a mixture of NaNO₃ and RbNO₃ is used as the heat storage material 2 as shown in Fig. 4, the solid-liquid coexistence state is obtained at Tₘᵢₙ (250 degrees) if the mole fraction of RbNO₃ is set to 0.105 (mass fraction is 0.169). When a mixture of LiBr and NaNO₃ is used as the heat storage material 2 as shown in Fig. 5, the solid-liquid coexistence state is obtained at Tₘᵢₙ (280 degrees) if the mole fraction of NaNO₃ is set to 0.964 (mass fraction is 0.963). Similar to Fig. 1b, the temperature range for the solid-liquid coexistence state is indicated by the bold solid line in Figs. 2-5.

A mixed salt having three or more components may also be used as the heat storage material 2 as long as the mixed salt has a non-eutectic composition and takes the solid-liquid coexistence state at the minimum heat storage temperature Tₘᵢₙ.

For example, a mixed salt of NaNO₃, KNO₃ and NaNO₂, which is called "heat transfer salt (HTS)," is known as a three-component molten salt. The composition of HTS was changed from a generally used eutectic composition (NaNO₃ was 7mol%, KNO₃ was 44mol%, NaNO₂ was 49mol%, and the melting point was 142 degrees C) to a non-eutectic composition (NaNO₃ was 7mol%, KNO₃ was 70mol%, and NaNO₂ was 23mol%) to carry out the solidification experiment. As a result, the heat storage material 2 having the solid phase peeled off the cooling surface in the form of small particles. It was confirmed that the solid phase became easy to peel off the cooling surface.

As described above, the heat storage system 1 of this embodiment uses, as the heat storage material 2, a mixed salt having a non-eutectic composition that becomes the solid-liquid coexistence state at the minimum heat storage temperature Tₘᵢₙ.

Accordingly, the heat storage material 2, which solidifies and becomes the solid phase, does not firmly stick onto the cooling surface, but becomes easy to peel off. Therefore, it is possible to suppress the deterioration of the heat transfer due to the solid phase heat storage material 2. As a result, it is possible to utilize the latent heat even if the heat transfer tube is not arranged in the entire heat storage vessel 3. A cost reduction and an increase in an amount of heat storage become possible.

In addition, because the heat storage material 2 does not firmly adhere to the cooling surface but peels off in the heat storage system 1, it is still possible to suppress the heat transfer deterioration even if the solid phase rate is set to a higher value at the minimum heat storage temperature Tₘᵢₙ than a conventional arrangement. This further increases the amount of heat storage.

In the heat storage system 1 that has the minimum heat storage temperature Tₘᵢₙ being 150 degrees C or higher, no conventional heat storage material 2 can be used in the solid-liquid coexistence state and can suppress the adhesion of the solid phase onto the cooling surface. Thus, the present invention is considered to be able to significantly contribute to developments in the heat storage system 1 that is used in a high temperature range.

The present invention is not limited to the above-described embodiment. It goes without saying that various changes and modifications may be made to the embodiment without departing from the scope and spirit of the present invention.

### EXAMPLES

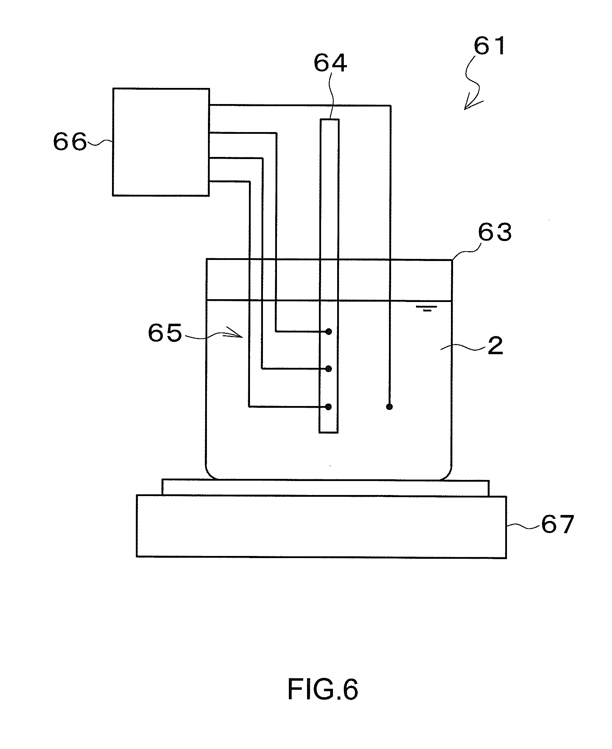

In order to confirm by experiments whether the solid phase sticks onto the cooling surface or can separate from the cooling surface, experiment equipment 61 was prepared as shown in Fig. 6, and the experiments were carried out.

The experiment equipment 61 includes a beaker 63, a heat storage material 2 received in the beaker 63, and a metal plate 64 such that one end of the metal plate 64 is immersed in the heat storage material 2 and the other end of the metal plate 64 is exposed from the heat storage material 2 for cooling. The temperature of a heater 67 situated below the beaker 63 was gradually lowered, and how the solid phase was generated was observed while the temperature distribution of the metal plate 64 in its longitudinal direction and the temperature of the heat storage material 2 were being measured with a thermocouple 65 and a data logger 66. Although not shown, that end of the metal plate 64 which was exposed from the heat storage material 2 was covered with a heat insulation member in order to delay the generation of the solid phase for the sake of easier observation.

A mixture of potassium nitrate and sodium nitrate shown in Fig. 1b was used as the heat storage material 2. Because a substance having a larger specific heat is advantageous for heat storage, the mixture of potassium nitrate and sodium nitrate normally has a composition containing a larger amount of sodium nitrate than a eutectic composition (mole fraction of sodium nitrate is 0.49). Specifically, the mixture of potassium nitrate and sodium nitrate normally has a composition with the mole fraction of sodium nitrate being 0.64, which is called "solar salt." In this experiment, a composition that had more sodium nitrate than the solar salt, which is indicated by the bold broken line in Fig. 1b, was used. In other words, the non-eutectic composition with the mole fraction of sodium nitrate being 0.786 (mass fraction was 0.755) was used.

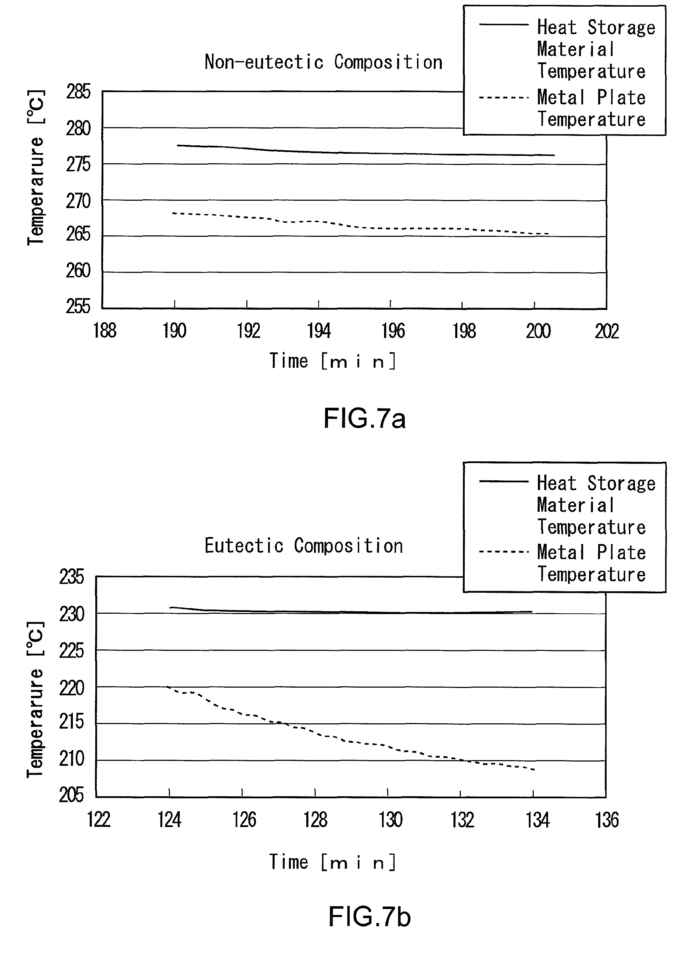

As the temperature of the heat storage material 2 was gradually decreased, the solid phase appeared in the vicinity of meniscus on the metal plate 64 where the temperature became the lowest. The solid phase grew along the surface of the metal plate 64, but did not stick onto the metal plate 64. The solid phase peeled off due to the flowing movement of the liquid phase heat storage material 2 as the liquid phase heat storage material was stirred. The solid phase which grew along the surface of the metal plate 64 was semi-transparent, and a dendrite-like concave-convex was observed. The convex portion had a lower transparency than the thin portion. Fig. 7a depicts this temperature change. As depict in Fig. 7a, the temperature of the metal plate 64 dropped as the temperature of the heat storage material 2 dropped, but the temperature difference therebetween was almost unchanged.

In the non-eutectic composition, the zone for the solid-liquid coexistence state has a certain temperature range, and has a unique solid phase rate (solid fraction) at that temperature. When the solidification starts, the solid phase rate in the vicinity of the surface of the metal plate 64 locally increases. Thus, it is assumed that the solidification of the liquid phase heat storage material proceeds while the liquid phase heat storage material 2 having a relatively low melting point is penetrating between the metal surface and the solid phase. It is therefore assumed that the heat storage material 2 having the solid phase does not stick onto the metal plate 64 until the temperature decreases sufficiently, and that the heat storage material is easy to peel off.

For comparison, on the other hand, a heat storage material having a eutectic composition was gradually cooled and observed. A solid phase was generated in the form of transparent and thin film on the surface of the metal plate 64 that was immersed in the heat storage material. The solid phase increased its thickness gradually, and did not peel off in spite of the flowing movement of the stirred liquid phase heat storage material. Fig. 7b shows the temperature change of this example. As shown in Fig. 7b, the heat storage material had a substantially fixed temperature during solidification. However, the temperature of the metal plate 64 greatly decreased as the solid phase grew, and the temperature difference between the metal plate and the heat storage material increased.

As described above, when the heat storage material 2 had the non-eutectic composition, the solid phase generated on the metal surface peeled off due to the flowing movement of the stirred heat storage material 2 in the liquid phase whereas when the heat storage material had the eutectic composition, the solid phase did not peel off. It is assumed that the different adhesion of the solid phase onto the metal surface is caused by a fact that the solid-liquid coexistence region of the non-eutectic molten salt has a certain temperature range.

Therefore, when a mixed salt having a non-eutectic composition that takes a solid-liquid coexistence state at the minimum heat storage temperature Tₘᵢₙ is used as the heat storage material 2, the solid phase heat storage material 2 does not firmly adhere to the cooling surface but becomes easy to peel off. As such, it is possible to suppress the heat transfer deterioration due to the heat storage material 2 that has become the solid phase.

### REFERENCE NUMERALS AND SYMBOLS

1: Heat storage system
2: Heat storage material
3: Heat storage vessel
4: Heat exchanger on the cooling side
5: Heat exchanger on the heating side

## Claims

1. A heat storage system having a minimum heat storage temperature Tₘᵢₙ comprising:
a mixed salt having a non-eutectic composition, the mixed salt being configured to assume a solid-liquid coexistence state at the minimum heat storage temperature Tₘᵢₙ, the mixed salt being used as a heat storage material.

2. The heat storage system according to claim 1, wherein the heat storage material has a temperature range of at least one degree C to assume the solid-liquid coexistence state.

3. The heat storage system according to claim 1 or 2, wherein the minimum heat storage temperature Tₘᵢₙ is equal to or greater than 150 degrees C.
